# EUROPÄISCHE PATENTSCHRIFT

(11) **EP 0 988 922 B1**
(45) Veröffentlichungstag und Bekanntmachung des Hinweises auf die Patenterteilung: **10.01.2007**
(21) Anmeldenummer: 99118227.0
(22) Anmeldetag: 14.09.1999
(51) Int. Cl.: B23P 21/00, E05B 17/00

(54) **Verfahren zur maschinellen Montage von Beschlagteilen an Flügel- und/oder Blendrahmen von Fenstern, Türen oder dergleichen und Vorrichtung zur maschinellen Montage von Beschlagteilen an Flügel- und/oder Blendrahmen von Fenstern, Türen oder dergleichen**
Method and device for automatically assembling fittings to wings and/or frames of windows, doors or the like
Procédé et dispositif de montage automatique des ferrures sur les ailes et/ou dormants des fenêtres, portes ou similaires

(30) Priorität: 21.09.1998 DE 19843269
(43) Veröffentlichungstag der Anmeldung: 29.03.2000
(73) Patentinhaber: ROTO FRANK Aktiengesellschaft, 70771 Leinfelden-Echterdingen (DE)
(72) Erfinder: Kurth, Martin, Dr., 72768 Reutlingen (DE)

(56) Entgegenhaltungen:
- EP-A- 0 683 297
- DE-A- 4 417 818
- DE-U- 29 803 656
- US-A- 5 022 143
- US-A- 5 140 743

## Beschreibung

Die Erfindung betrifft ein Verfahren zur maschinellen Montage von Beschlagteilen an Flügel- und/oder Blendrahmen von Fenstern, Türen oder dergleichen sowie eine Vorrichtung zur maschinellen Montage von Beschlagteilen an Flügel- und/oder Blendrahmen von Fenstern, Türen oder dergleichen.

Aus der DE 44 17 818 A1 ist ein Verfahren und eine Vorrichtung zur montageautomaten-unterstützten Montage von Beschlagteilen an dem Flügel eines Fensters, einer Tür oder dergleichen bekannt. Die Vorrichtung weist eine auch als Fördereinrichtung beziehungsweise Transporteinrichtung bezeichnete Rollbahn für den Flügelrahmen auf. Der Flügelrahmen wird so weit gefördert, bis er an einen Anschlag trifft. Außerdem ist er an einer Anschlagleiste geführt, so daß eine Ausrichtung des Flügelrahmens gewährleistet ist. In Montagestellung fixiert, wird ein Eckbeschlag am Flügelrahmen mit einer Montagestation angelegt und befestigt. Die Montagestation weist ein Halteelement sowie eine Schraubereinrichtung auf. Die gesamte Montagestation ist entlang zweier Achsen verfahrbar und außerdem um eine senkrecht auf den beiden Achsen stehende weitere Achse drehbar. Mit der Montagestation wird aus einem Magazin ein Eckband entnommen und durch Verfahren der Montagestation an den Flügelrahmen angelegt und mit der Schraubereinrichtung verschraubt. Soll ein weiteres Eckband am Flügelrahmen angeschlagen werden, so muß die Montagestation wieder zum Magazin zurückfahren und ein weiteres Eckband aufnehmen. Anschließend fährt die Montageeinheit eine andere Ecke des Flügelrahmens an und bringt dort das zweite Eckband an. Soll ein drittes und gegebenenfalls auch ein viertes Eckband angeschlagen werden, wiederholen sich die vorstehend erwähnten Schritte. In einer anderen Ausführungsform der bekannten Vorrichtung ist vorgesehen, daß nach erfolgter Montage eines Eckbands die Montageeinrichtung wieder zum Magazin fährt und ein neues Eckband aufnimmt und dabei der Flügelrahmen um 90° gedreht wird, so daß das zweite Eckband an einer anderen Ecke des Flügelrahmens befestigt werden kann.

Nachteilig bei der bekannten Vorrichtung ist, daß der Flügelrahmen nicht nur in Transportrichtung bewegt, sondern auch auf der Fördereinrichtung beziehungsweise auf einem Montagetisch gedreht werden muß. Dies kann zu Beschädigungen am Flügelrahmen führen. Bei dem Ausführungsbeispiel der Vorrichtung, bei der der Montageautomat sämtliche Ecken des Flügelrahmens anfährt ist nachteilig, daß jeweils nur ein Eckband aus dem Magazin entnommen werden kann, welches dann angelegt und verschraubt wird, so daß dann der Montageautomat beziehungsweise die Montageeinheit wieder zum Magazin zurückfahren muß, um ein neues Eckband aufnehmen zu können. Um den Flügelrahmen mit mehreren Eckbeschlägen zu beschlagen, ist also ein hoher Zeitaufwand erforderlich, da -bei mehreren anzubringenden Eckbeschlägen- die Montageeinheit immer zum Magazin zurückfahren muß. Aus der DE 44 17 818 A1 geht einerseits hervor, Beschläge durch an ein und demselben Ort erfolgendes Verdrehen des Flügels sowohl zuzuführen als auch festzuschrauben. Ferner können unterschiedliche Beschläge an unterschiedlichen Beschlagsort jeweils sowohl zugeführt als auch montiert werden. So wird an einem Beschlagsort die Eckumlenkungsmontage durchgeführt und an einem anderen Beschlagsort die Langteilmontage.

Aus der DE 298 03 656 U1 geht ein Einpressen von mit Krallen versehenen Langteilen in eine Nut eines beweglichen Flügels oder eines feststehenden Rahmens einer Tür oder eines Fensters hervor. Dadurch, dass die Krallen Formschlussverbindungen zu den Nutwandungen herbeiführen, ist die automatische Montage von Eckumlenkungen nicht möglich. Ferner erfolgt lediglich eine halbautomatische Fertigung, das heißt, ein Monteur bringt eine Baueinheit in die Nut ein und drückt dabei die Deckschiene in die gestufte Nutöffnung. Anschließend wird die vorausgerüstete Tür beziehungsweise das vorausgerüstete Fenster einem Schraubautomaten zugeführt, der selbsttätig Befestigungsmittel anbringt.

Es ist daher Aufgabe der Erfindung, ein Verfahren und eine Vorrichtung zur maschinellen Montage von Beschlagteilen an Flügel- und/oder Blendrahmen von Fenster, Türen oder dergleichen anzugeben, welches/welche hochflexibel und bezüglich der Zeitaufwendung für die Montage der Beschlagteile effektiv ist.

Diese Aufgabe wird mit einem Verfahren gelöst, welches die Merkmale des Anspruchs 1 aufweist. Es ist ein Verfahren zur maschinellen Montage von Beschlagteilen an Flügel- und/oder Blendrahmen von Fenstern, Türen oder dergleichen vorgesehen. In einem ersten Bearbeitungsschritt wird mindestens einem Holm des sich an einem ersten Montageort befindlichen Flügel- und/oder Blendrahmens mindestens ein maschinell gegriffenes Beschlagteil zugeführt und auf diese Weise in vorgebbarer Position am Rahmen durch reibschlüssiges Einklipsen oder reibschlüssiges Einpressen in eine Flügel-/Blendrahmenfalz-Umfangsnut vorfixiert wird. In einem weiteren Bearbeitungsschritt wird der Rahmen an einen weiteren (zweiten) Montageort verbracht, um nachfolgend in einem zweiten Bearbeitungsschritt das Beschlagteil an dem Holm maschinell festzuschrauben. Das heißt, das Beschlagteil, das im ersten Bearbeitungsschritt an dem Holm vorfixiert wurde, wird im zweiten Bearbeitungsschritt maschinell am Holm festgeschraubt. Im Zuge dieser Anmeldung muß der erste Montageort nicht zwangsläufig mit einer ersten Bearbeitungsstation zusammenfallen. Das heißt, der Montageort bezieht sich immer auf den Holm, so daß beispielsweise an einer ersten Montagestation der erste Bearbeitungsschritt, also die Vorfixierung vorgenommen wird, und daß anschließend in einem weiteren Bearbeitungsschritt wieder ein Beschlagteil am Rahmen vorfixiert wird, wobei dieser weitere Bearbeitungsschritt an einem anderen Montageort durchgeführt werden kann, und daß dann der Rahmen an den für den ersten am Rahmen vorfixierten Beschlag vorgesehenen zweiten Montageort verbracht wird. Räumlich gesehen kann also für den Holm, der das erste Beschlagteil aufweist, der zweite Montageort an einer dritten Montagestation vorliegen. Mit anderen Worten: Das Anschlagen eines Beschlagteils an einem Holm des Rahmens wird in zwei Bearbeitungsschritte aufgeteilt, wobei in dem ersten Bearbeitungsschritt die Vorfixierung des Beschlagteils erfolgt und in dem zweiten Bearbeitungsschritt das vorfixierte Beschlagteil festgeschraubt wird. Zwischen diesen beiden Bearbeitungsschritten kann beispielsweise ein erster Bearbeitungsschritt für ein weiteres Beschlagteil liegen, also ein weiteres Beschlagteil an einem Holm des Rahmens vorfixiert werden. Durch das Vorfixieren eines Beschlagteils durch reibschlüssiges Einklipsen oder reibschlüssiges Einpressen in eine Flügel-/Blendrahmenfalz-Umfangsnut wird das Beschlagteil fest im Rahmen gehalten, so daß beim Transport zum nächsten Montageort das Beschlagteil nicht herausfallen oder seine Position verändern kann. Dadurch wird beim nachfolgenden beziehungsweise zweiten Montageschritt das maschinelle Festschrauben des Beschlags gewährleistet. Für das Vorfixieren durch Einklipsen oder Einpressen wird also ein Reibschluß zwischen Beschlagteil und Rahmen hergestellt. Mit dem erfindungsgemäßen Verfahren ist es also in vorteilhafter Weise möglich, ein erstes Beschlagteil an einem Holm des Rahmens vorzufixieren und anschließend den Rahmen weiterzutransportieren, so daß an diesem Montageort an einem Holm eines anderen Rahmens eines Fensters wiederum ein erstes Beschlagteil vorfixiert werden kann. Das am ersten Flügelrahmen vorfixierte Beschlagteil kann -während vorzugsweise gleichzeitig am zweiten Rahmen wiederum ein Beschlagteil vorfixiert wird- am zweiten Montageort verschraubt werden. Somit wird die Produktionsgeschwindigkeit wesentlich erhöht. Da außerdem an einer Station nur vorfixiert und an einer weiteren Station nur verschraubt wird, kann auf einfache Art und Weise eine Anpassung des Verfahrens an unterschiedliche Größen von Flügel- und/oder Blendrahmen erfolgen. Außerdem kann eine leichte Anpassung an unterschiedliche Beschläge vorgenommen werden, da das maschinelle Zuführen nicht mit dem maschinellen Verschrauben gekoppelt ist, wie dies jedoch bei der kombinierten Montagestation, bestehend aus Haltevorrichtung und Schraubereinrichtung, vorgesehen ist. Das heißt, beim Stand der Technik ist eine fest vorgegebene räumliche Zuordnung zwischen Schraubereinrichtung und Halteeinrichtung gegeben.

In bevorzugter Ausführungsform ist vorgesehen, daß das maschinell gegriffene Beschlagteil entlang der Längsachse des Holms frei verfahrbar ist. Es können hierzu frei programmierbare numerisch-gesteuerte Achsen vorgesehen sein, so daß ein Anfahren beziehungsweise positionieren des Beschlagteils an jeder beliebigen Stelle am Holm möglich ist. Bei der Verlagerung entlang der Längsachse des Holmes ist auch vorgesehen, daß im wesentlichen quer, insbesondere rechtwinklig zur Längsachse des Holms das Beschlagteil verfahrbar ist, so daß das Einsetzen des Beschlagteils in den Rahmen erfolgt. Selbstverständlich ist es auch denkbar, daß bei Verwendung von sogenannten NC-Achsen eine Abtastung beispielsweise des Flügelrahmens erfolgen kann, so daß ein geregeltes Positionieren des Beschlagteils möglich ist. Selbstverständlich kann auch eine Steuerung vorgesehen sein, so daß vorgegebene, feste Positionen mit dem Beschlagteil angefahren werden können.

In einer Weiterbildung der Erfindung ist vorgesehen, daß eine das maschinelle Festschrauben vornehmende Schraubendrehereinrichtung parallel zur Längsachse des Holmes frei verfahrbar ist. Selbstverständlich können auch hier die vorstehend erwähnten NC-Achsen vorgesehen sein, so daß auch die Schraubendrehereinrichtung an jede beliebige Stelle am Holm verfahrbar ist. Selbstverständlich ist die Schraubendrehereinrichtung auch quer, insbesondere rechtwinklig zur Längsachse des Holmes verfahrbar, so daß der eigentliche Einschraubvorgang vorgenommen werden kann, bei dem die Schraubendrehereinrichtung der in den Rahmen eintretenden Schraube nachgeführt wird.

In besonders bevorzugter Ausführungsform ist vorgesehen, daß die Montage von Beschlagteilen von einem Eckbereich des Rahmens beginnend in Richtung auf eine benachbarte Ecke des Rahmens erfolgt. Mit anderen Worten: Ausgehend von einem Eckbereich werden die Beschlagteile für einen Holm -entlang seiner Längsachse- nacheinander in den Rahmen eingesetzt, bis der andere Eckbereich des Holmes erreicht ist.

In einer Weiterbildung der Erfindung ist vorgesehen, daß die Montage der Beschlagteile derart erfolgt, daß beim Zuführen eines Beschlagteils angrenzend an ein bereits zugeführtes Beschlagteil gleichzeitig selbsttätig die Kopplung der beiden Beschlagteile erfolgt. Das heißt, bei Beschlagteilen, an denen bewegliche Teile verschiebbar angeordnet sind, erfolgt eine Kopplung der beweglichen Teile bereits beim Zuführen des zweiten Beschlagteils. Dies ist insbesondere vorteilhaft, wenn sogenannte Stulpschienen mit daran verschiebbar angeordneten Getriebeteilen beziehungsweise Treibstangen am Rahmen montiert werden sollen. Üblicherweise weisen derartige Treibstangen Kopplungsstellen auf, so daß eine mechanische Kopplung mit einem anderen Getriebeteil beziehungsweise einer anderen Treibstange möglich ist, so daß die Kraftübertragung für ein Verriegeln beziehungsweise Entriegeln des Fensters möglich ist. Selbstverständlich können die Kopplungsstellen beziehungsweise die Kopplungseinrichtungen zweier Beschlagteile so ausgeführt sein, daß ein Klipsen möglich ist. Damit werden die gekoppelten Beschlagteile beim Transport zu einem nächsten Montageort sicher aneinander gehalten.

Beim Montieren eines Eckbeschlags ist in einer Weiterbildung der Erfindung vorgesehen, daß dieser derart zugeführt wird, daß zunächst ein Schenkel des Eckbeschlags in einen Abschnitt der Flügel /Blendrahmenfalz-Umfangsnut eintritt und der andere Schenkel durch Verfahren parallel zur Längsachse des Holmes in den ihm zugeordneten Abschnitt der Flügel-/Blendrahmenfalz-Umfangsnut mit eintritt. Dadurch kann das maschinelle Greifen des Eckbeschlags lediglich an einem Schenkel erfolgen. Nachdem also der erste Schenkel in die Umfangsnut eingesetzt ist, erfolgt durch eine Translationsbewegung ein Einschieben des anderen Schenkels in den ihm zugeordneten Abschnitt der Umfangsnut.

Es ist auch vorgesehen, daß der in Montagerichtung vorstehende Eckbeschlag-Schenkel in die zur Montagerichtung parallel zeigenden Rahmenschenkel eingeschoben wird. Dies ist bevorzugt bei Rahmenschenkelprofilen mit einer Umfangsnut möglich, die eine Hinterschnittkontur besitzen. Durch entsprechende Führungselemente am Eckbeschlag ist es möglich, daß der eingeschobene Schenkel des Eckbeschlags fest in der Hinterschnittkontur des Rahmens verankert wird, so daß keine Schraubbefestigung an diesem erforderlich ist. Der zweite Schenkel des Eckbeschlags wird -wie bereits beschrieben- in die entsprechende Umfangsnut am Rahmen eingedrückt und nachfolgend verschraubt.

Alternativ kann jedoch auch vorgesehen sein, daß ein als Eckbeschlag ausgebildetes Beschlagteil derart dem Rahmen zugeführt wird, daß gleichzeitig beide Schenkel des Eckbeschlags in den entsprechenden Abschnitt der Umfangsnut eintreten.

Nach einer Weiterbildung der Erfindung ist vorgesehen, daß zum Zuführen des Beschlagteils das maschinelle Greifen an einem Formmerkmal des Beschlagteils erfolgt. Derartige Formmerkmale können beispielsweise sogenannte Pilzzapfen, Nuten, Langlöcher oder dergleichen sein. Es werden hier also Formmerkmale zum Greifen ausgenutzt, die an jedem Beschlag ohnehin vorgesehen sind. Für das maschinelle Greifen müssen also keine besonders ausgebildeten Beschlagteile bereitgestellt werden.

In bevorzugter Ausführungsform ist vorgesehen, daß die zu montierenden Beschlagteile mindestens einem Magazin maschinell entnommen werden. Somit ist es auf einfache Art und Weise möglich, mehrere Rahmen nacheinander einem Montageschritt zuzuführen, wobei durch das maschinelle Greifen eines Beschlagteils dieses aus dem Magazin entnommen wird und dem Holm zugeführt wird. Anschließend kann ein weiteres Beschlagteil dem Magazin entnommen werden und demselben Holm oder einem anderen Holm eines anderen Fensters zugeführt werden.

Ein bevorzugtes Ausführungsbeispiel zeichnet sich dadurch aus, daß die Entnahmeposition des Beschlagteils durch Verlagerbarkeit des Magazins stets gleich ist. Damit bleibt die Bewegung eines Greifers beim maschinellen Greifen bei jedem Bestückungsvorgang gleich. Dies vereinfacht den Steuerungsaufwand. Außerdem kann die Produktionsgeschwindigkeit beziehungsweise Montagegeschwindigkeit erhöht werden, da keine unnötigen Verfahrwege zurückgelegt werden müssen.

Weitere Ausgestaltungen des erfindungsgemäßen Verfahrens ergeben sich aus den Unteransprüchen.

Die Aufgabe wird auch mit einer Vorrichtung zur maschinellen Montage von Beschlagteilen an Flügel- und/oder Blendrahmen von Fenstern, Türen oder dergleichen gelöst, die die Merkmale des Anspruchs 11 aufweist. Insbesondere dient diese Vorrichtung zur Durchführung des Verfahrens nach einem oder mehreren der Ansprüche 1 bis 10.

Die erfindungsgemäße Vorrichtung zeichnet sich durch eine maschinelle Zuführeinrichtung und eine maschinelle Befestigungseinrichtung aus, wobei die auf die Beschlagteile abgestimmte Zuführeinrichtung einer ersten Montagestation und die auf die dieselben, vorher zugeführten Beschlagteile abgestimmte Befestigungseinrichtung einer zweiten Montagestation zugeordnet ist. Die Zuführeinrichtung kann beispielsweise ein Greifer sein, der das maschinelle Greifen des Beschlagteils übernimmt und das gegriffene Beschlagteil dem Rahmen zuführt. Mit der Befestigungseinrichtung kann dann in der zweiten Montagestation das vorher zugeführte Montageteil am Rahmen befestigt werden. Außerdem ist erfindungsgemäß eine maschinelle Verlagerungseinrichtung vorgesehen, die den Rahmen von der ersten zur zweiten Montagestation transportiert.

Bezüglich der Formulierung "Montagestation" ist noch folgendes festzuhalten: Die erste und zweite Montagestation bezieht sich auf den Holm des Flügel- und/oder Blendrahmens. Das heißt, an der ersten Montagestation erfolgt die Vorfixierung des Beschlagteils. An der zweiten Montagestation wird die Verschraubung des Beschlagteils mit dem Holm beziehungsweise dem Rahmen durchgeführt. Die erste Montagestation für den Holm muß also nicht -räumlich gesehen- der zweiten Montagestation unmittelbar vorgeordnet sein. Selbstverständlich kann der ersten Montagestation für den Holm eine weitere erste Montagestation für einen anderen Holm nachgeschaltet sein.

In bevorzugter Ausführungsform ist die Zuführeinrichtung als Greifereinrichtung, Unterdruckeinrichtung und/oder Magneteinrichtung ausgebildet. Mithin kann mittels der Zuführeinrichtung ein Beschlagteil gegriffen, mittels Unterdruck oder Magnetwirkung aufgenommen und gehalten werden, so daß die Zuführung des Beschlagteils zum Holm des Rahmens ermöglicht wird. Die Greifereinrichtung kann beispielsweise zangenartig ausgebildet sein, wobei die Greiffunktion durch Öffnen oder Schließen der Zange bereitgestellt werden kann. Soll beispielsweise ein Beschlagteil an einem Pilzzapfen gegriffen werden, kann die Greifereinrichtung beim Schließen der Zange das Beschlagteil greifen. Selbstverständlich kann auch vorgesehen sein, daß bei der Auseinanderbewegung der Zange diese beispielsweise in eine Nut oder ein Langloch am Beschlagteil eingreift und dies quasi durch Spreizen der Greiferzange maschinell gehalten beziehungsweise gegriffen wird. Selbstverständlich kann die Greifereinrichtung an bestimmt Formmerkmale am Beschlagteil angepaßt sein. Diese Formmerkmale können beispielsweise die vorstehend erwähnten Pilzzapfen, Langlöcher, Nuten oder dergleichen sein.

In einer Weiterbildung der Vorrichtung ist vorgesehen, daß die Zuführeinrichtung, also die Greifereinrichtung, Unterdruckeinrichtung und Magneteinrichtung entlang der Längsachse mindestens eines Holmes des Flügel- und/oder Blendrahmens frei verfahrbar geführt ist. Dadurch kann beispielsweise durch Bereitstellen von sogenannten NC-Achsen jede beliebige Position am Holm angefahren werden, so daß für jedes am Holm anzubringende Beschlagteil die entsprechende Position von der Zuführeinrichtung eingenommen werden kann.

Gemäß einer Weiterbildung der Erfindung ist die Befestigungseinrichtung ebenfalls entlang der Längsachse mindestens eines Holmes des Flügel- und/oder Blendrahmens frei verfahrbar geführt, so daß auch die Befestigungseinrichtung an jeder beliebigen Stelle am Holm positioniert werden kann.

In besonders bevorzugter Ausführungsform ist die Befestigungseinrichtung eine Schraubereinrichtung, mit der das maschinelle Festschrauben des Beschlagteils am Holm durchgeführt wird.

Nach einer Weiterbildung der Erfindung bewegt die Verlagerungseinrichtung den Flügel- und/oder Blendrahmen translatorisch, es wird also keine Drehung des Rahmens durchgeführt, um weitere Beschlagteile am Rahmen zu fixieren beziehungsweise zu verschrauben.

Weitere Ausgestaltungen ergeben sich aus den Unteransprüchen.

Die Erfindung wird nachfolgend anhand von Ausführungsbeispielen mit Bezug auf die Zeichnung näher erläutert. Es zeigen:
- Figur 1: ein erstes Ausführungsbeispiel einer Montageeinrichtung für die Montage von Beschlagteilen an einem Flügelrahmen eines Fensters, wobei der Flügelrahmen für Rechtsanschlag vorgesehen ist,
- Figur 2: die Montageeinrichtung der Figur 1 für links anzuschlagende Flügelrahmen,
- Figur 3: ein zweites Ausführungsbeispiel einer Montageeinrichtung für Beschlagteile,
- Figur 4: ein drittes Ausführungsbeispiel einer Montageeinrichtung für Beschlagteile,
- Figur 5: ein Ausführungsbeispiel einer Greifereinrichtung,
- Figur 6: eine Detailansicht einer Greifereinrichtung, die ein Beschlagteil hält,
- Figur 7: ein Bewegungsablauf eines gegriffenen und zugeführten Beschlagteils,
- Figur 8: ein eingeklipstes Beschlagteil,
- Figur 9: ein festgeschraubtes Beschlagteil,
- Figur 10: ein erstes Ausführungsbeispiel eines Beschlagsatzes für einen dreh-kippöffenbaren Flügelrahmen,
- Figur 11: ein zweites Ausführungsbeispiel eines Beschlagsatzes für einen dreh-kippöffenbaren Flügelrahmen,
- Figur 12: ein erstes Ausführungsbeispiel einer Kopplungseinrichtung für Beschlagteile,
- Figur 13: ein zweites Ausführungsbeispiel einer Kopplungseinrichtung, und
- Figur 14: schematisch einen Bewegungsablauf eines Eckbands beim Zuführen zu einem Holm.

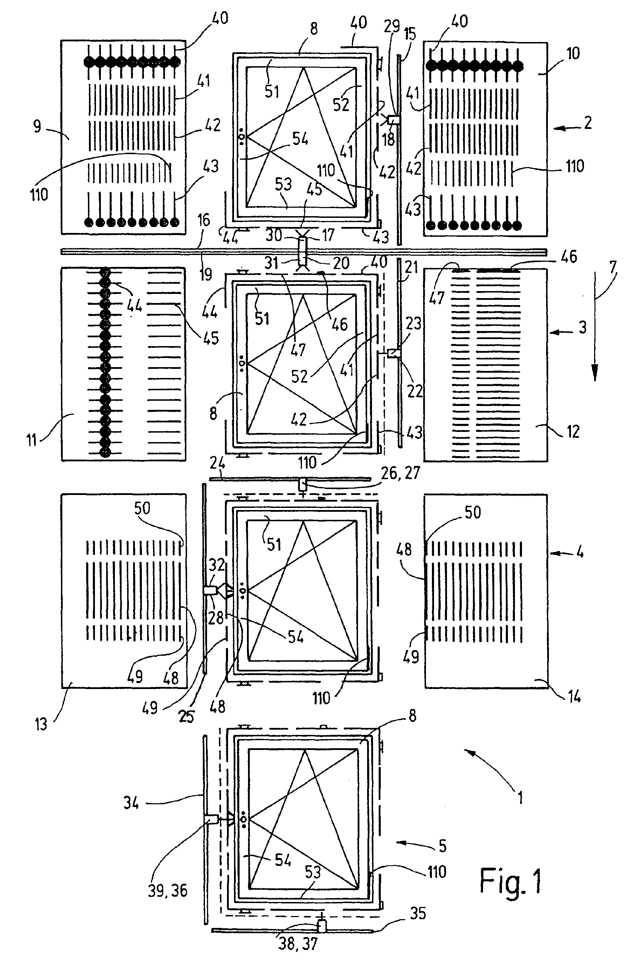

In Figur 1 ist eine Montageeinrichtung 1 zum Montieren von Beschlagteilen an Flügel- und/oder Blendrahmen von Fenstern, Türen oder dergleichen dargestellt. Rein beispielhaft wird im nachfolgenden beschrieben, wie Beschlagteile am Flügelrahmen eines Fensters montiert werden.

Die Montageeinrichtung 1 umfaßt mehrere, hier vier Montagestationen 2,3,4 und 5, die in Transportrichtung 7 eines Flügelrahmens 8 hintereinander geschaltet sind. Um einen Flügelrahmen 8 von der Station 2 zur Station 3 beziehungsweise von der Station 3 zur Station 4 beziehungsweise von der Station 4 zur Station 5 transportieren zu können, ist eine hier nicht dargestellte Transporteinrichtung beziehungsweise Verlagerungseinrichtung vorgesehen, die beispielsweise als Förderband oder Rollenbahn ausgebildet sein kann. Alternativ kann vorgesehen sein, daß verfahrbare Anschläge oder dergleichen verwendet werden, die den Flügelrahmen ergreifen und mitnehmen. Insbesondere kann vorgesehen sein, daß sich die Rollenbahn über die gesamte Länge der Montageeinrichtung 1 erstreckt, wobei für den Transport des Flügelrahmens 8 zumindest einige Rollen der Rollenbahn drehangetrieben sein können. Selbstverständlich kann sich -ausgehend von der Station 2- die Verlagerungseinrichtung beziehungsweise die Rollenbahn auch entgegen der Transportrichtung 7 erstrecken, so daß der Montageeinrichtung 1 die Flügelrahmen 8 automatisch zugeführt werden können. Beispielsweise ist der Montageeinrichtung 1 eine Bearbeitungsstation für Flügelrahmen 8 zugeordnet, in der die einzelnen Holme des Flügelrahmens 8 miteinander verbunden werden, so daß sich der in Figur 1 dargestellte Flügelrahmen 8 ergibt.

Die Montageeinrichtung 1 gemäß Figur 1 ist hier rein beispielhaft für die Beschlagsmontage für rechts angeschlagene Flügelrahmen ausgebildet.

Der Montagestation 2 sind Magazine 9 und 10 für die Aufnahme und Bereitstellung von Beschlagteilen zugeordnet. Entsprechend sind der Montagestation 3 weitere Magazine 11 und 12 zugeordnet; der Montagestation 4 schließlich sind ebenfalls zwei Magazine 13 und 14 zugeordnet.

An der Montagestation 1 sind zwei Führungsbahnen 15 und 16 vorgesehen, die als sogenannte NC-Achsen ausgebildet sein können. Die Führungsbahn 15 erstreckt sich im wesentlichen parallel zur Transportrichtung 7. Die Führungsbahn 16 hingegen verläuft im wesentlichen rechtwinklig zur Führungsbahn 15. Beiden Führungsbahnen 15 und 16 ist jeweils eine Zuführeinrichtung 17 beziehungsweise 18 zugeordnet, die zur Aufnahme von Beschlagteilen aus den Magazinen 9 und 10 und zur Zuführung der maschinell gegriffenen Beschlagteile zum Flügelrahmen 8 ausgebildet sind. Die Zuführeinrichtungen 17 und 18 sind auf ihrer zugehörigen Führungsbahn frei verlagerbar, so daß jede beliebige Position auf der entsprechenden Führungsbahn 15 beziehungsweise 16 von der Zuführeinrichtung eingenommen werden kann. Mit der Zuführeinrichtung 17 können jedoch auch aus den Magazinen 11 und 12 Beschlagteile entnommen werden.

Der Montagestation 3 ist eine Führungsbahn 19 zugeordnet, die im wesentlichen parallel zur Führungsbahn 16 liegt. Die Führungsbahn 19 kann ebenfalls als sogenannte NC-Achse ausgebildet sein. Der Führungsbahn 19 ist eine Zuführeinrichtung 20 zugeordnet, mit der ein Beschlagteil aus den Magazinen 11 und/oder 12 aufgenommen und einem Flügelrahmen zugeführt werden kann. Der Montagestation 3 ist eine Führungsbahn 21 zugeordnet, die im wesentlich rechtwinklig zur Führungsbahn 19 verläuft beziehungsweise im wesentliche parallel zur Transportrichtung 7 liegt. Die Führungsbahn 21 trägt eine Befestigungseinrichtung 22 für Beschlagteile, die insbesondere als Schraubereinrichtung 23 ausgebildet sein kann.

Der Montagestation 4 sind ebenfalls zwei Führungsbahnen 24 und 25 zugeordnet, wobei die Führungsbahn 24 im wesentlichen rechtwinklig zur Transportrichtung 7 liegt und die Führungsbahn 25 im wesentlichen parallel zur Transportrichtung 7 verläuft. Auf der Führungsbahn 24 ist eine frei verlagerbare Befestigungseinrichtung 26 angeordnet, die als Schraubereinrichtung 27 ausgebildet sein kann. Der Führungsbahn 25 hingegen ist eine Zuführeinrichtung 28 zugeordnet, die entlang der Führungsbahn 25 frei verlagerbar ist. Die Zuführeinrichtung 28 dient zur Aufnahme von Beschlagteilen aus den Magazinen 13 und 14 und zum Zuführen der aufgenommenen Beschlagteile zu einem Flügelrahmen. Die Zuführeinrichtungen 17, 18, 20 und 28 können jeweils als Greifereinrichtung 29, 30, 31 und 32 ausgebildet sein, die eine zangenartige Greifeinheit 33 aufweisen können.

Der Montagestation 5 sind Führungsbahnen 34 und 35 zugeordnet, die jeweils eine Befestigungseinrichtung 36 beziehungsweise 37 tragen, die entlang der zugehörigen Führungsbahn 34 und 35 frei verlagerbar sind. Die Befestigungseinrichtungen 36 und 37 sind vorzugsweise als Schraubereinrichtung 38 beziehungsweise 39 ausgebildet.

Die in Figur 1 dargestellten Magazine 9 bis 14 sind in sogenannter Auffüllposition dargestellt. Das heißt, in der in Figur 1 wiedergegebenen Position ist ein Bestücken der Magazine 9 bis 14 vorgesehen. In Arbeitsposition befinden sich die Magazine 9 bis 14 vorzugsweise unterhalb der Flügelrahmen, insbesondere unterhalb der hier nicht dargestellten Transport- beziehungsweise Verlagerungseinrichtung für die Flügelrahmen 8. Diese auch als Unterfluranordnung bezeichnete Positionierung der Magazine 9 bis 14 ist insofern vorteilhaft, als das die entsprechende Zuführeinrichtung 17, 18, 20 und 28 keine unnötigen Schwenkbewegungen durchführen muß, da ein Greifen beziehungsweise aufnehmen der in den Magazinen 9 bis 14 befindlichen Beschlagteile lediglich durch Abkippen der Zuführeinrichtung 17, 18, 20 und 28 erfolgt. Es ist jedoch auch möglich, daß die Magazine 9 bis 14 in der in Figur 1 gezeigten Position in der Arbeitsstellung vorliegen.

In den Magazinen 9 bis 14 sind die Beschlagteile magazinartig aufgenommen, so daß mittels einer Zuführeinrichtung 17, 18, 20, 28 jeweils ein einzelnes Beschlagteil gegriffen beziehungsweise aufgenommen werden kann. Sofern ein Beschlagteil entnommen ist, ist vorzugsweise vorgesehen, daß das nächste Beschlagteil in Entnahmeposition befördert wird. Hierzu kann insbesondere eine Rütteleinrichtung oder eine Fördereinrichtung vorgesehen sein. Auch eine schiefe Ebene kann vorgesehen sein, auf der die Beschlagteile in die Entnahmeposition rutschen. Außerdem sind die Beschlagteile in den Magazinen 9 bis 14 so gelagert, daß die jeweils unterschiedlichen Beschlagteile im wesentlichen benachbart zum späteren Einbauort am Flügelrahmen 8 vorliegen, so daß hier geringe Transportwege beziehungsweise Zuführwege eingehalten werden können, wodurch die Produktionsgeschwindigkeit erhöht ist.

Die Magazine 9 bis 14 sind wie folgt bestückt:

Im Magazin 9 ist die sogenannte Axer-Eckbaugruppe 40 beziehungsweise der Axer-Eckbeschlag, ein erster Mittelverschluß 41 sowie ein zweiter Mittelverschluß 42, ein Eckband 43 gegebenenfalls mit Eckbandsicherung und ein Beschlagteil 110 aufmagaziniert. Das Magazin 10 ist vorzugsweise wie das Magazin 9 bestückt.

Im Magazin 11 ist ein Getriebe-Eckbeschlag 44 sowie ein dritter Mittelverschluß 45 bevorratet. Im Magazin 12 ist ein Axerstulp 46 sowie ein Ablängteil 47 bevorratet.

Die Magazine 13 und 14 sind vorzugsweise identisch bestückt, wobei ein Getriebe 48 sowie ein Verbindungsteil 49 und ein Ablängteil 50 gelagert sind.

Nachfolgend wird für einen dreh-kippöffenbaren Flügelrahmen 8 die Montage der zugehörigen Beschlagteile an den Querholmen 51 und 53 sowie an den Längsholmen 52 und 54 des Flügelrahmens 8 beschrieben. Der Flügelrahmen 8 wird der ersten Montagestation 2 zugeführt und auf einem hier nicht näher dargestellten Bearbeitungstisch fixiert, so daß der Längsholm 52 im wesentlichen parallel zur Führungsbahn 15 liegt. Der Querholm 53 liegt dabei ebenfalls im wesentlichen parallel zu der Führungsbahn 16. In dieser Position wird der Flügelrahmen 8 fixiert, so daß eine Bewegung während der Beschlagsmontage nicht möglich ist. Für die Fixierung des Flügelrahmens 8 können beispielsweise schwenkbare Krallen und/oder Festanschläge vorgesehen sein. Die Anzahl der Festanschläge beziehungsweise der schwenkbaren Krallen kann entsprechend dem Fensterformat, also der Flügelrahmenlänge beziehungsweise -breite variiert werden. Damit der Flügelrahmen 8 in seine Montageposition gefahren beziehungsweise bewegt werden kann, können Greifer oder Anschläge vorgesehen sein, die verlagerbar ausgestaltet sind. Diese Greifer können am sogenannten Flügelüberschlag angreifen und den Flügelrahmen 8 in die gewünschte Montageposition bringen. Damit ein Verspannen beziehungsweise ein Verzug des Flügelrahmens verhindert wird, können die Greifer schwimmend gelagert sein. Nachdem die Greifer den Flügelrahmen 8 in Bearbeitungsposition verbracht haben, werden die zuvor erwähnten schwenkbaren Krallen ausgefahren, die den Flügelrahmen 8 dann gegen die Festanschläge drücken. Nachdem der Rahmen 8 positioniert ist beziehungsweise während der Rahmen 8 positioniert wurde, hat die Zuführeinrichtung 18 bereits einen Axer-Eckbeschlag 40 aus dem Magazin 9 oder 10 aufgenommen und dem Flügelrahmen 8 zugeführt, insbesondere in eine Umfangsnut des Rahmens 8 eingesetzt, und durch das Zuführen den Axer-Eckbeschlag 40 in der umlaufenden Nut des Flügelrahmens 8 vorfixiert, insbesondere eingeklemmt beziehungsweise eingeklipst. Nachfolgend wird mittels der Zuführeinrichtung 18 das erste Mittelteil 41 aufgenommen und ebenfalls in der Umfangsnut des Flügelrahmens 8 beziehungsweise des Längsholms 52 positioniert. Nachfolgend erfolgt die Vorfixierung, also das Einklemmen beziehungsweise Einklipsen des zweiten Mittelverschlusses 42 im Längsholm 52. Anschließend wird von der Zuführeinrichtung 18 eine Eckbandsicherung 43 aus dem Magazin 9 oder 10 entnommen und am Flügelrahmen 8 vorfixiert, also eingeklipst beziehungsweise eingeklemmt. Gleichzeitig mit den Montageoperationen der Zuführeinrichtung 18 nimmt die Zuführeinrichtung 17 den Getriebe-Eckbeschlag 44 aus dem Magazin 11 auf und positioniert ihn entsprechend am Querholm 53. Anschließend nimmt die Zuführeinrichtung 17 den dritten Mittelverschluß 45 auf und führt diesen dem Querholm 53 zu, so daß der dritte Mittelverschluß 45 ebenfalls vorfixiert ist. Durch die Vorfixierung der Beschlagteile an dem Längsholm 52 und dem Querholm 53 ist der erste Montageschritt für diese beiden Holme 52 und 53 abgeschlossen. Gegebenenfalls kann an der Montagestation 2 eine Bohreinheit angeordnet sein, die vorzugsweise auf der Führungsbahn 15 angeordnet ist. Mit der Bohreinheit können nach oder vor der Montage der Beschlagbaugruppen am Querholm 53 Bohrungen für ein Eckband im Flügelüberschlag eingebracht werden. Anschließend kann mit der Zuführeinrichtung 18 das Eckband 110 aus dem Magazin 9 oder 10 aufgenommen und dem Flügelrahmen 8 zugeführt werden.

Anschließend werden die den Flügelrahmen 8 in Montageposition haltenden Krallen weggeschwenkt, so daß der Flügelrahmen 8 für den Transport zur Montagestation 3 freigegeben ist. Selbstverständlich erfolgt auch auf der Montagestation 3 ein Fixieren des Flügelrahmens 8 in der vorgegebenen Montageposition. In der Montagestation 3 wird der Querholm 51 ebenfalls mit dem Getriebe-Eckbeschlag 44 mittels der Zuführeinrichtung 20 bestückt. Außerdem positioniert die Zuführeinrichtung 20 den Axerstulp 46 und das Ablängteil 47 am Querholm 51. Zum Ablängen von Beschlagteilen kann an den beiden Enden der Führungsbahn 16 und 18 stationär eine Ablängeinrichtung, bevorzugt eine Stanze, angeordnet sein. Dabei nimmt die Zuführeinrichtung 17 oder 20 das Ablängteil 47 aus dem Magazin 12 und schiebt es in die Ablängeinrichtung ein. Das Ablängmaß wird durch die Positionierung der Zuführeinrichtung 17 oder 20 auf der Führungsbahn 16 oder 19 eingestellt. Das heißt, bei Verwendung von NC-Achsen kann aus der Koordinate der Zuführeinrichtung 17 oder 20 das Ablängmaß bestimmt und die Ablängeinrichtung entsprechend eingestellt werden. Simultan hierzu erfolgt in einem zweiten Montageschritt die Verschraubung der Beschlagteile 40, 41, 42, 43 und 110 mittels der Befestigungseinrichtung 22 beziehungsweise der Schraubereinrichtung 23, wobei der Axer-Eckbeschlag 40 und das Eckband 43 lediglich an einem Schenkel, der parallel zur Führungsbahn 21 liegt, verschraubt werden. Der zweite Montageschritt für den Längsholm 52 wird also an der Montagestation 3 durchgeführt, wobei für den Querholm 51 in der Montagestation 3 der erste Bearbeitungsschritt, also das Vorfixieren der Beschlagteile durchgeführt wird.

Nach dem Lösen der Verklemmeinrichtungen an der Montagestation 3, kann der Flügelrahmen 8 zur Montagestation 4 transportiert werden, um nachfolgend wieder in einer Bearbeitungsposition mittels Krallen oder dergleichen fixiert zu werden. In einem zweiten Bearbeitungsschritt werden die in Station 3 montierten Beschlagteile 44, 47, 46 und der bisher nicht verschraubte Schenkel des Beschlags 40 mittels der Befestigungseinrichtung 26 beziehugsweise der Schraubereinrichtung 27 verschraubt. Gleichzeitig erfolgt mittels der Zuführeinrichtung 28 die Bestückung des Längsholms 54 mit den Beschlagteilen 48, 49 und 50, die wahlweise aus dem Magazin 13 und/oder 14 mittels der Zuführeinrichtung 28 beziehungsweise der Greifereinrichtung 32 maschinell aufgenommen werden können. Das Ablängteil kann hier, ebenfalls wie in Montagestation 3, einer an den Enden der Führungsbahn 25 befindlichen stationären Ablängeinrichtung durch die Zuführeinrichtung 28 zugeführt werden. Das Ablängmaß wird durch den Verfahrweg der Zuführeinrichtung 28 auf der Führungsbahn 25 bestimmt. Für den Längsholm 54 ergibt sich also der erste Bearbeitungsschritt, also das Vorfixieren der Beschlagteile an der Montagestation 4.

Nach dem Lösen der Arbeitsfixierung des Flügelrahmens 8 in Station 4, wird der Transport des Flügelrahmens 8 zur Montagestation 5 durchgeführt. Mittels der Befestigungseinrichtungen 36 und 37 beziehungsweise den Schraubereinrichtungen 38 und 39 erfolgt dann der zweite Bearbeitungsschritt für den Längsholm 54 und den Querholm 53. Das heißt, die Beschlagteile werden mittels der Schraubereinrichtungen 38 und 39 an den Holmen 53 und 54 des Flügelrahmens 8 verschraubt. Somit ergibt sich für den Querholm 53 der zweite Bearbeitungsschritt beziehungsweise der zweite Montageort an der Montagestation 5, wobei der erste Bearbeitungsschritt des Querholms 53 an der Montagestation 2 bewerkstelligt wurde. Somit wird deutlich, daß ein vorfixiertes Beschlagteil nicht unmittelbar an der nachfolgenden Montagestation verschraubt werden muß.

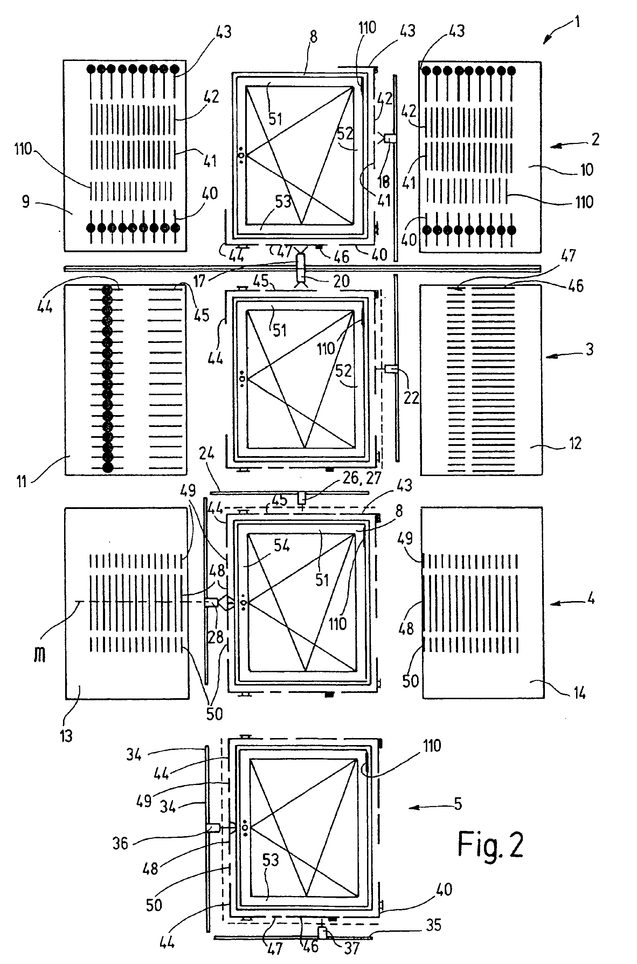

Soll ein Flügelrahmen 8 für Linksanschlag vorgesehen sein, so ergibt sich die Montage der Beschlagteile wie nachfolgend im Zusammenhang mit der Figur 2 beschrieben. Gleiche Teile wie in der Figur 1 sind mit denselben Bezugszeichen versehen, insofern wird auf deren nochmalige Beschreibung verzichtet.

Nachfolgend wird daher nur auf Unterschiede gegenüber dem Montageablauf gemäß Figur 1 eingegangen. Im Magazin 11 ist der Getriebe-Eckbeschlag 44 bevorratet, der im Eckbereich zwischen Querholm 53 und Längsholm 54 mittels der Zuführeinrichtung 17 vorfixiert wird. Weiterhin sind im Magazin 9 beziehungsweise 10 der erste und zweite Mittelverschluß 41 und 42 magaziniert, wobei die Lage bezüglich der Magazine 9 und 10 in Figur 1 beim Magazin 9 beziehungsweise 10 in Figur 2 seitenverkehrt beziehungsweise spiegelsymmetrisch ist. Das heißt, in den Magazinen 9 und 10 in Figur 2 ist das Eckband 43 mit Eckbandsicherung oben angeordnet. Der Axer-Eckbeschlag 40 hingegen ist im Magazin 9 und 10 unten bevorratet. Die Mittelverschlüsse 41 und 42 sind ebenfalls vertauscht angeordnet.

Ein Austausch der bestückten Magazine 9 bis 10 kann besonders einfach dadurch realisiert werden, daß diese als Schubladen ausgebildet sind, so daß das Magazin 9 Beschlagteile für einen rechten und das Magazin 10 Beschlagteile für einen linken Flügel enthält. Im übrigen können die Magazine 11 bis 14 ebenfalls als Schubladen ausgebildet sein. Mithin kann die Montageeinrichtung 1 schnell und einfach von rechts- auf linkgsangeschlagene Flügelrahmen umgestellt werden. Selbstverständlich gilt dies auch für eine Konfigurationsänderung von links- auf rechtsangeschlagene Flügelrahmen.

Bei der Bestückung der Magazine 9 bis 14 ist also darauf zu achten, daß die Beschlagteile bereitgestellt beziehungsweise so im Magazin angeordnet werden, daß sie ohne unnötige Verfahrwege der Zuführeinrichtungen am Flügelrahmen 8 positioniert werden können.

Nachdem in der Montagestation 2 die Holme 52 und 53 mit den Beschlagteilen 41, 42, 43, 110 und 40, 44, 47 und 46 bestückt wurden, erfolgt ein Transport des Flügelrahmens 8 zur Montagestation 3, an der nun der Getriebe-Eckbeschlag 44 und das dritte Mittelstück 45 mittels der Zuführeinrichtung 20 am Querholm 51 vorfixiert werden. Gleichzeitig werden die Beschlagteile am Längsholm 52 mittels der Befestigungseinrichtung 22 festgeschraubt.

Nachfolgend wird der Flügelrahmen 8 zur Montagestation 4 transportiert und dort wiederum in seiner Arbeitsposition festgelegt. Mittels der Zuführeinrichtung 28 wird das Getriebe 48, das Verbindungsteil 49 und das Ablängteil 50 am Längsholm 54 vorfixiert, wobei im Magazin 13 das Verbindungsteil 49 und das Ablängteil 50 gegenüber dem Magazin 13 in Figur 1 vertauscht angeordnet sind. Durch unterschiedliche Beschlagsanordnung im Magazin 13 und 14 für rechts und links angeschlagene Flügelrahmen, können ohne Auswechseln der Magazine beide Flügelarten gegebenenfalls auch abwechselnd beziehungsweise gleichzeitig bearbeitet werden. Das heißt, daß beispielsweise in der Montagestation 2 ein links anzuschlagender Flügelrahmen vorliegt und in den Montagestationen 3, 4 und 5 noch ein rechts anzuschlagender Flügelrahmen fertigbearbeitet wird.

Das Getriebe 48 ist um eine Mittellängsachse M um 180° versetzt im Magazin 13 in Figur 2 angeordnet. Während also der Längsholm 54 mit den Beschlagteilen 48, 49 und 50 bestückt wird, werden am Querholm 51 die Beschlagteile 45, 44 und 43 festgeschraubt, wobei bei den Beschlagteilen 43 und 44 lediglich der Schenkel verschraubt wird, der parallel zur Führungsbahn 24 liegt.

An der der Montagestation 4 nachgeschalteten Montagestation 5 werden dann die Beschlagteile 44, 48, 49 und 50 verschraubt, wobei mittels der Befestigungseinrichtung 36 die Schenkel der Beschlagteile 44 verschraubt werden, die parallel zur Führungsbahn 34 liegen. Mit der Befestigungseinrichtung 37 werden die parallel zur Führungsbahn 35 liegenden Schenkel der Beschlagteile 44 und 40 verschraubt. Außerdem werden die Beschlagteile 46 und 47 am Querholm 53 mittels Verschrauben festgelegt.

Es ergibt sich also auch bei dem Funktionsablauf gemäß Figur 2 für jeden Holm 51 bis 54 ein erster Bearbeitungsschritt an einem ersten Montageort, bei dem das entsprechende Beschlagteil zunächst lediglich vorfixiert und dann in einem zweiten Bearbeitungsschritt an einem zweiten Montageort verschraubt wird, wie dies im Zusammenhang mit der Figur 1 bereits beschrieben wurde.

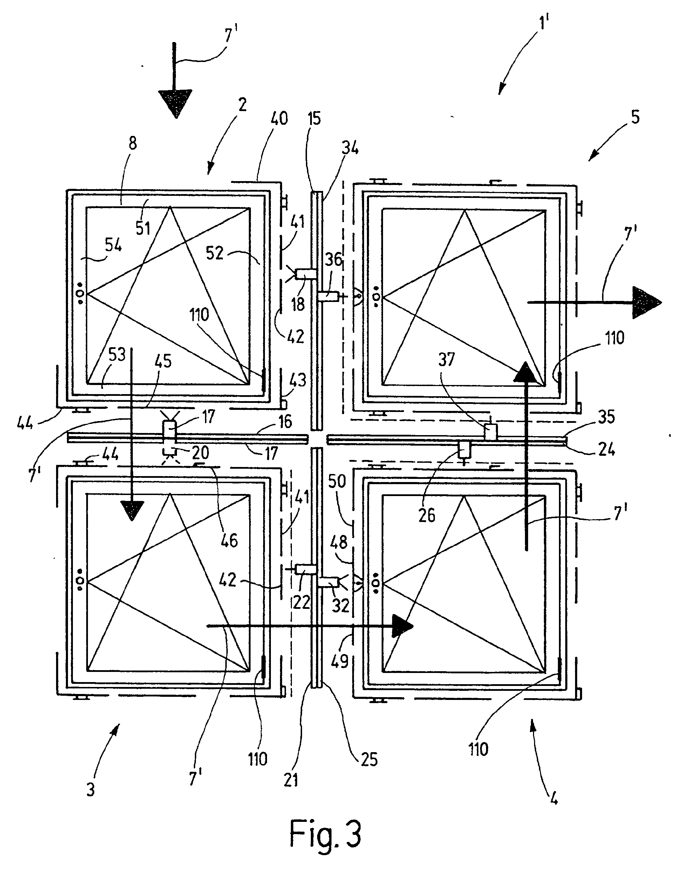

Figur 3 zeigt ein weiteres Ausführungsbeispiel einer Montageeinrichtung 1', bei der die einzelnen Montagestationen 2 und 3 hintereinanderliegen und die Montagestationen 4 und 5 hintereinanderliegen, jedoch parallel zu den Montagestationen 2 und 3 angeordnet sind. Somit ergibt sich für die Flügelrahmen 8 eine Transportrichtung 7' in Figur 3, wie dies durch Pfeile angedeutet ist. Die Führungsbahnen für die Zuführeinrichtungen und die Befestigungseinrichtungen sind in diesem Ausführungsbeispiel der Montageeinrichtung 1'kreuzförmig angeordnet. Die Führungsbahnen 15 und 34 liegen also parallel zueinander. Die Führungsbahnen 16 und 17 liegen parallel zueinander und weisen vorzugsweise einen Winkel von 90° gegenüber der Führungsbahn 15 beziehungsweise 34 auf. Die Führungsbahnen 21 und 25 liegen parallel zueinander und sind in einem Winkel von 90° zu den Führungsbahnen 16 und 17 angeordnet. Die Führungsbahn 24 und die Führungsbahn 35 liegen parallel zueinander und schließen mit der Führungsbahn 15 beziehungsweise 34 einen Winkel von 90° ein.

Die auch als Inselanordnung bezeichnete Anordnung der Montagestationen 2 bis 5 ermöglicht eine besonders platzsparende Anordnung der Montageeinrichtung 1'. Gleiche Teile wie in den Figuren 1 und 2 sind mit denselben Bezugszeichen versehen. Insofern wird auf deren Beschreibung verwiesen. In der Montageeinrichtung 1' ist hier beispielhaft ein Flügelrahmen 8 für Rechtsanschlag wiedergegeben. Selbstverständlich können jedoch auch links anzuschlagende Flügelrahmen mit Beschlagteilen bestückt werden. Gegebenenfalls kann dann eine Anpassung der hier in Figur 3 nicht dargestellten Magazine erfolgen. Auch hier sind die Magazine vorzugsweise Unterflur, also unter einer hier nicht dargestellten Transporteinrichtung, auf der der Flügelrahmen 8 aufliegt, angeordnet.

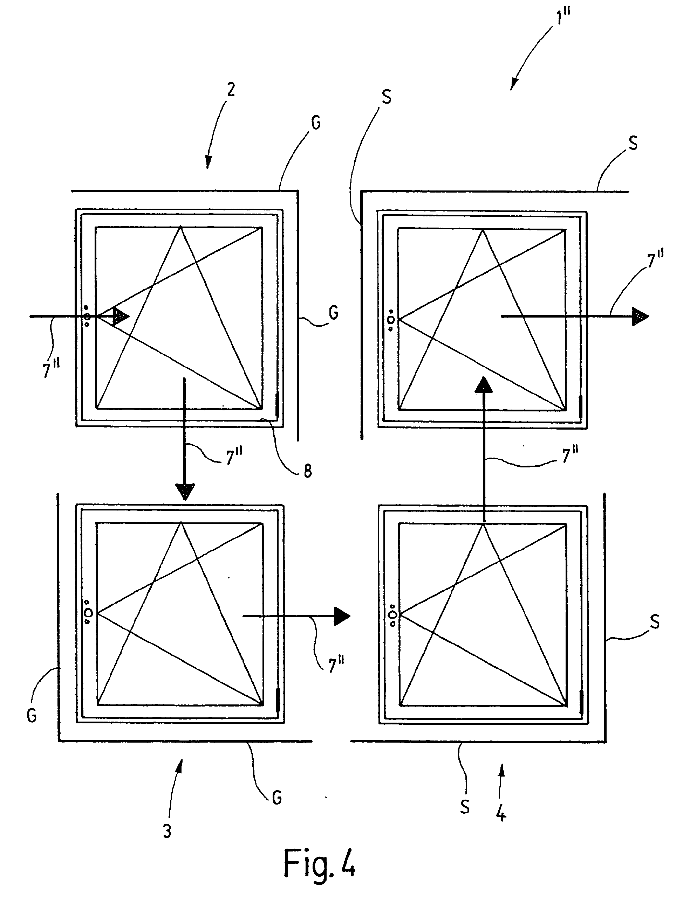

Figur 4 zeigt ein drittes Ausführungsbeispiel einer Montageeinrichtung 1', das sich gegenüber dem Ausführungsbeispiel 1' in Figur 3 dadurch unterscheidet, daß die Führungsbahnen so angeordnet sind, daß bei einem Transport in Pfeilrichtung 7'' des Flügelrahmens 8 keine Führungsbahn überfahren werden muß. Dies ist insofern vorteilhaft, als das auf die Position eines Greifers beziehungsweise einer Zuführeinrichtung und einer Befestigungseinrichtung beziehungsweise einer Schraubereinrichtung keine Rücksicht genommen werden muß. Das heißt, der Flügelrahmen 8 kann bereits zur nächsten Montagestation transportiert werden, obwohl die Zuführeinrichtung und Befestigungseinrichtung noch nicht in einer Grundstellung vorliegen. Die Ausrüstung der Führungsbahnen mit einer Zuführeinrichtung beziehungsweise einer Befestigungseinrichtung ist in Figur 4 dadurch dargestellt, daß eine Führungsbahn mit einem Greifer mit G und eine Führungsbahn mit einer Schraubereinrichtung mit S gekennzeichnet ist. Demgemäß wird in den ersten beiden Montagestationen 2 und 3 der Flügelrahmen 8 mit den Beschlagteilen bestückt und in den Montagestationen 4 und 5 werden diese Beschlagteile dann verschraubt.

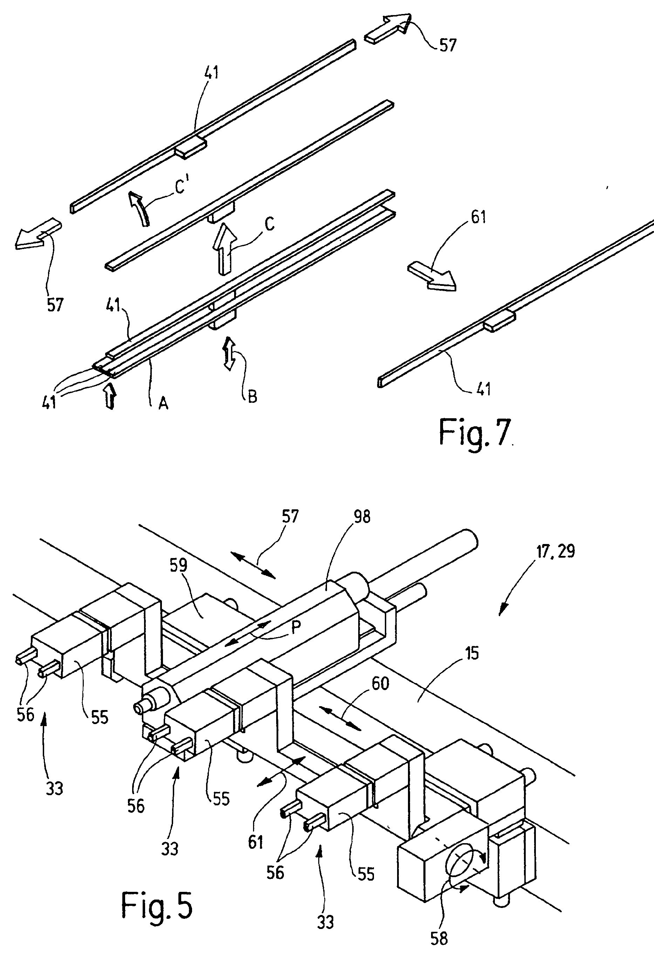

Die Figur 5 zeigt eine Zuführeinrichtung 17, die als Greifereinrichtung 29 ausgebildet ist. Die Greifereinrichtung 29 weist mehrere Greifer 55 auf, die beabstandet zueinander liegen, jedoch in Reihe angeordnet sind. Jeder Greifer 55 weist zwei Greiffinger 56 auf, so daß zwei Greiffinger 56 eine zangenartige Greifeinheit 33 bilden. Vorzugsweise ist jede Greifeinheit 33 pneumatisch betätigbar. Selbstverständlich kann jede andere geeignete Antriebsart verwendet werden. Die gesamte Zuführeinrichtung 17 ist auf der Führungsbahn 15 verfahrbar geführt, wie dies durch einen Doppelpfeil 57 angedeutet ist. Außerdem ist die Greifereinrichtung 29 um die Führungsbahn 15 schwenkbar gelagert, wie dies durch den Doppelpfeil 58 angedeutet ist. Der Schwenkradius beziehungsweise der Schwenkwinkel der Greifereinrichtung 29 umfaßt vorzugsweise 90°, so daß -ausgehend von der in Figur 5 dargestellten waagrechten Position- ein nach Vornekippen um 90° möglich ist, so daß die Greifer 55 ein unter ihnen liegendes Beschlagteil greifen und aufnehmen können. Je nach Länge des aufzunehmenden Beschlagteils beziehungsweise je nach dem an welcher Stelle am Flügelrahmen ein Beschlagteil angebracht werden soll, werden entweder alle drei Greifer 55 betätigt beziehungsweise benötigt oder lediglich ein Greifer beziehungsweise zwei Greifer. Beispielsweise bei dem in Figur 7 dargestellten Mittelverschluß 41, der relativ lang ausgebildet ist, werden vorzugsweise alle drei Greifer 55 eingesetzt. Bei einem kurzen Beschlagteil, beispielsweise dem Ablängteil 47 genügt es, wenn zumindest ein Greifer 55 dieses Beschlagteil aufnimmt. Insbesondere für das Positionieren des Axer-Eckbeschlags 40, beziehungsweise der Beschlagteile 43 und 44 ist vorzugsweise vorgesehen, daß die Greifer 55 auf einem Greiferbett 59 in Pfeilrichtung 60 verfahrbar sind. Dies ist insofern vorteilhaft, als daß der Axer-Eckbeschlag 40 an seinem der Führungsbahn 15 parallel liegenden Schenkel gegriffen und in die Umfangsnut des Flügelrahmens 8 eingesetzt wird. Durch eine Bewegung in Pfeilrichtung 60 wird es dann ermöglicht, daß auch der rechtwinklig zur Führungsbahn 15 liegende Schenkel des Axer-Eckbeschlags 40 in den ihm zugeordneten Abschnitt der Umfangsnut eintreten kann. Es ist also vorgesehen, daß beim Zuführen eines Eckteils beziehungsweise allgemein einer Eckbaugruppe ein Zuführen des Beschlagteils in Pfeilrichtung 61 erfolgt und anschließend eine Verschiebebewegung in Pfeilrichtung 60, so daß beide Schenkel einer Eckbaugruppe in der Umfangsnut plaziert werden können.

Anhand der Figur 7 wird rein beispielhaft das Aufnehmen und Zuführen eines Beschlagteils an den entsprechenden Holm des Flügelrahmens beschrieben. Vorzugsweise ist vorgesehen, daß ein im Magazin vorliegendes Beschlagteil durch eine Hebeeinrichtung im Magazin leicht angehoben wird, so daß ein besonders einfaches Greifen und Separieren möglich ist. Die im Magazin befindlichen Beschlagteile 41 liegen also in Position A vor. Jeweils ein Beschlagteil 41 wird dann in Pfeilrichtung B aus dem Magazin herausgefördert. Dabei ist die Greifereinrichtung 29 in Pfeilrichtung 58 (Figur 5) nach unten gekippt, so daß beim Zurückkippen der Greifereinrichtung 29 in Pfeilrichtung 58 das Beschlagteil 41 entsprechend Pfeilrichtung C und C' in Zuführposition gebracht wird. Ein anschließendes Verfahren der Greifereinrichtung 29 in Pfeilrichtung 57 bringt das Beschlagteil 41 in die entsprechende Position zum Holm des Flügelrahmens. Durch eine Vorwärtsbewegung der Greifereinrichtung 29 in Pfeilrichtung 61 wird dann das Beschlagteil 41 in die Umfangsnut des Flügelrahmens eingesetzt und festgeklemmt beziehungsweise verklipst.

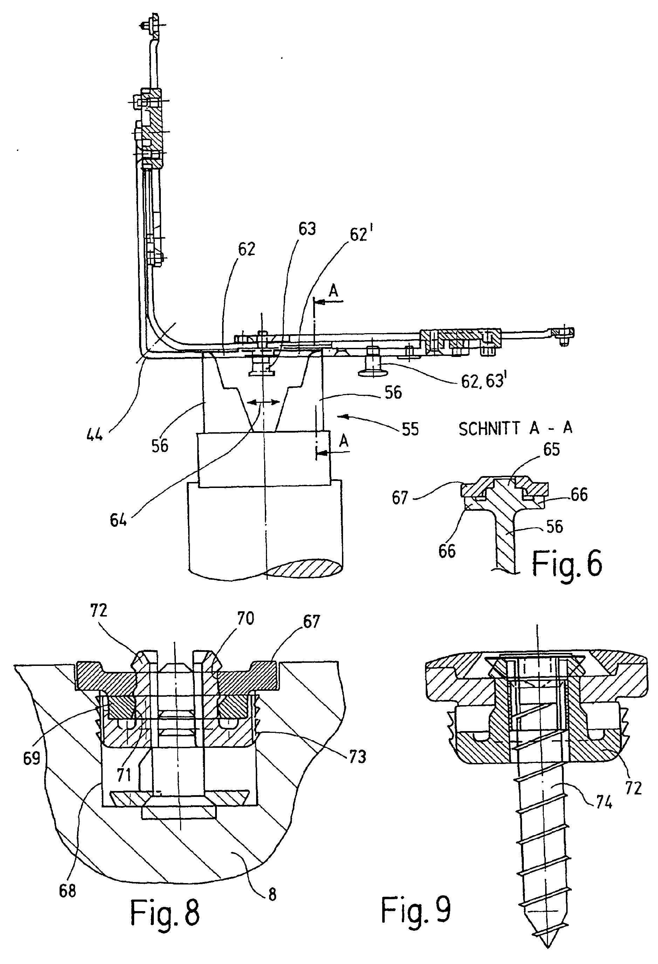

Figur 6 zeigt in Detailansicht einen Greifer 55 mit einem gegriffenen Beschlagteil, das hier beispielsweise der Getriebe-Eckbeschlag 44 ist. Es ist ersichtlich, daß die Greiffinger 56 in ein Formmerkmal 62 am Beschlag 44 eingreifen. Das Formmerkmal 62 ist hier ein Langloch 62', welches von einem Pilzzapfen 63 durchgriffen wird. Durch eine Auseinanderbewegung der Greiffinger 56 in Pfeilrichtung 64 wird das Beschlagteil 44 spannend gehalten. Gemäß Schnitt A-A in Figur 6 sind die Greiffinger 56 derart ausgebildet, daß sie mit einem Vorsprung 65 in das Formmerkmal 62, also in das Langloch 62' eingreifen. Außerdem weisen die Greiffinger 56 eine hammerartige Erweiterung 66 auf, so daß eine Anlage mit der Stulpschiene 67 des Beschlags 44 gebildet ist. Dadurch wird der Beschlag 44 sicher gehalten und kann nicht wegkippen.

Selbstverständlich ist es auch möglich, das an einem anderen Formmerkmal 62 des Eckbeschlags 44 mittels der Greiffinger 56 gegriffen wird. Beispielsweise kann dies auch ein Pilzzapfen 63' sein.

In Figur 8 ist in Schnittdarstellung ein in die Umfangsnut 68 des Flügelrahmens 8 eingesetztes Beschlagteil wiedergegeben, welches eine untere Stulpschiene 69 und eine obere Stulpschiene 67 aufweist. Die Stulpschienen 67 und 69 weisen jeweils einen Durchbruch 70 beziehungsweise 71 auf, durch die zumindest teilweise ein Einklipsteil 72 hindurchtritt. Damit sind zwei Stulpschienen miteinander gekoppelt. An der der unteren Stulpschiene 69 zugewandten Seite weist das Einklipsteil 72 eine Klipseinrichtung 73 auf, die mit den Seitenwänden der Umfangsnut 68 zusammenwirkt. Dadurch kann beim maschinellen Zuführen des Beschlagteils dieses in der Umfangsnut 68 vorfixiert werden.

Beim anschließenden Verschrauben des Beschlagteils tritt eine Schraube 74 (Figur 9) durch das Einklipsteil 72 hindurch, so daß das Beschlagteil fest mit den Flügelrahmen verbunden ist.

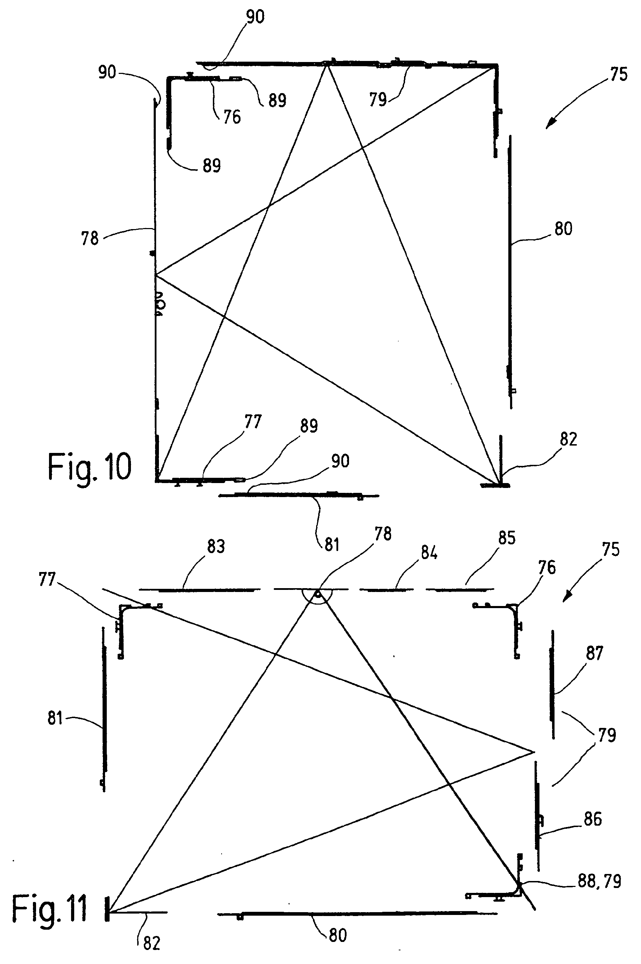

Die Figuren 10 und 11 zeigen jeweils ein Ausführungsbeispiel eines kompletten Beschlagsatzes 75 für Flügelrahmen, wobei in Figur 10 ein sogenannter integraler Zentralverschluß mit großen Baugruppen dargestellt ist. Der Beschlagsatz 75 gemäß Figur 10 weist eine Eckumlenkung 76, eine Getriebe-Eckumlenkung 78 mit einem Dreh-Kipplager 77 auf. Weiterhin umfaßt der Beschlagsatz 75 einen sogenannten Axerstulp 79, einen senkrechten Mittelverschluß 80, einen waagrechten Mittelverschluß 81 sowie eine Eckbandsicherung 82. Die Beschlagteile des Beschlagsatzes 75 können zur maschinellen Montage in den Magazinen 9 bis 14 aufmagaziniert sein, so daß sie mittels einer Greifeinrichtung beziehungsweise Zuführeinrichtung gegriffen und dem Flügelrahmen 8 zugeführt werden können.

Der Beschlagsatz 75 gemäß Figur 11 ist als sogenannter modularer Zentralverschluß ausgeführt und ist bevorzugt für die vollautomatische Montage vorgesehen. Gleiche Teile wie in Figur 10 sind mit denselben Bezugszeichen versehen. Es ist ersichtlich, daß das Drehkipp-Getriebe 78 in mehrere Baugruppen 83, 84 und 85 aufgeteilt ist, so daß ein Drehkipp-Getriebe 78 für unterschiedliche Flügelrahmenformate Verwendung findet. Um die gesamte Länge des Flügelrahmens abdecken zu können, sind -wie erwähnt- Baugruppen 83, 84 und 85 vorgesehen, wobei die Baugruppe 83 als Kopplungsteil zwischen Getriebe-Eckumlenkung 77 und dem Drehkipp-Getriebe 78 vorgesehen ist. Die Baugruppe 84 ist ein Zwischenteil, das über ein Ablängteil (Baugruppe 85) das Drehkipp-Getriebe 78 mit der Eckumlenkung 76 verbindet. Der Axerstulp 79 wird im Ausführungsbeispiel gemäß Figur 5 durch die Axer-Baugruppe 86 und ein als Ablängteil ausgebildetes Zwischenstück 87 gebildet. Dem Axerstulp ist außerdem eine Axer-Eckumlenkung 88 zugeordnet. Somit kann der Axerstulp 79 für jede Flügelbreite verwendet werden, da die eigentliche Anpassung an das Flügelformat mittels dem Ablängteil 87 vorgenommen werden kann.

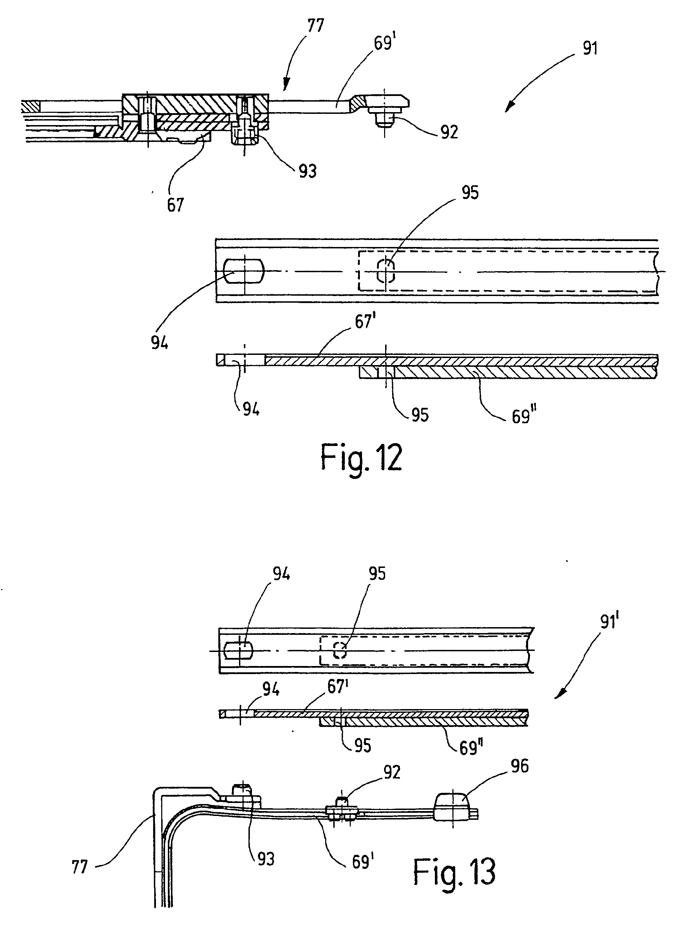

Die beweglichen Getriebeteile der Beschläge sind über grundsätzlich bekannte Kopplungseinrichtungen 89 und 90 koppelbar, so daß eine Kraftübertragung erfolgen kann. In Figur 12 ist eine Kopplungseinrichtung 91 dargestellt, wobei an der Eckumlenkung 77 eine gekröpfte Treibstange 69' vorgesehen ist, die mit einem Kopplungszapfen 92 an ihrem einen Ende ausgestattet ist. Eine Stulpschiene 67 weist ebenfalls einen Kopplungszapfen 93 auf. Beide Kopplungszapfen 92 und 93 treten in eine entsprechende Ausnehmung beziehungsweise einen Durchbruch 94 beziehungsweise 95 ein, so daß eine mechanische Verbindung realisiert ist. Der Durchbruch 95 ist einer Treibstange 69'' eines geraden Beschlagteils zugeordnet. Der Durchbruch 94 ist einer Stulpschiene 67' des geraden Beschlagteils zugeordnet.

In Figur 13 ist ein Ausführungsbeispiel eines Kopplungsteils 91' wiedergegeben. Gleiche Teile wie in Figur 12 sind mit denselben Bezugszeichen versehen. Das Kopplungsteil 91' weist eine Stabilisierungseinrichtung 96 auf, die U-förmig ausgebildet sein kann und an der Treibstange 69' der Getriebe-Eckumlenkung 77 angeordnet ist. Das Stabilisierungsteil 96 umgreift dabei in einem Abstand zum Kopplungszapfen 92 die Treibstange 69'' zumindest teilweise, so daß eine Verdrehsicherung zwischen Treibstange 69' und Treibstange 69'' gegeben ist. Somit wird eine sichere Kraftübertragung gewährleistet.

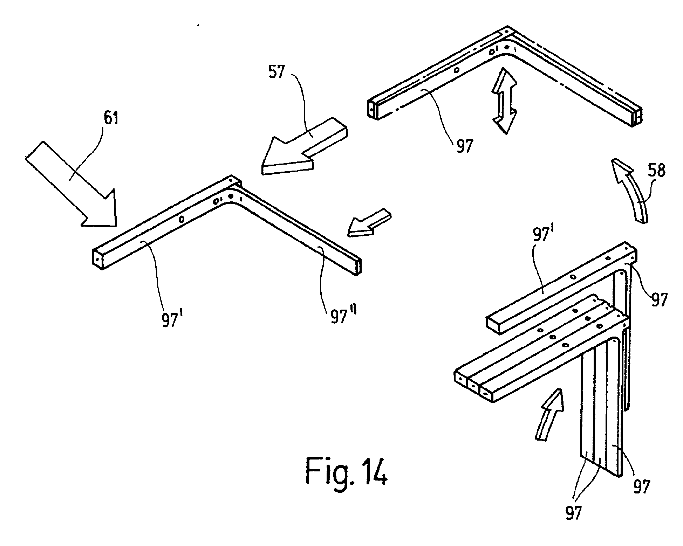

In Figur 14 wird beispielhaft die Entnahme eines Eckbeschlags, insbesondere einer Eckumlenkung 97 beschrieben. Mehrere Eckumlenkungen 97 sind stehend in einem Magazin gehalten. Das Magazin weist eine Hebevorrichtung auf, mit der jeweils das in Ausgabeposition befindliche Eckband 97 leicht angehoben werden kann. Am Schenkel 97' des Eckbandes 97 greift zumindest ein Greifer an, der bei seiner Rückwärtsbewegung, insbesondere eine Schwenkbewegung -gemäß Pfeilrichtung 58 in Figur 5- das Eckband 97 um ca. 90° verschwenkt. Außerdem erfolgt eine Höhenverstellung des Greifers, so daß das Eckband 97 dieselbe Höhe aufweist, wie die Umfangsnut am Flügelrahmen. Das heißt, die Schenkel 97' und 97'' des Eckbeschlags 97 fluchten mit der Umfangsnut. Durch eine anschließende translatorische Bewegung in Pfeilrichtung 57 wird das Eckband 97 entsprechend am Flügelrahmen positioniert beziehungsweise so weit in die Umfangsnut eingebracht, daß es einrastet beziehungsweise einklipst oder eingeklemmt wird. Durch eine anschließende Bewegung in Pfeilrichtung 61 des Greifers wird der Schenkel 97' in den ihm zugeordneten Abschnitt der Umfangsnut eingebracht. Somit liegen beide Schenkel 97' und 97'' des Eckbandes 97 in der Umfangsnut. Das heißt, der Eckbeschlag 97 ist vorfixiert und für eine nachfolgende Verschraubung vorgesehen.

Die Montage der Beschlagteile zeichnet sich also durch eine wahlweise beziehungsweise gemischte Bestückung von Eckbaugruppen und Verbindungselementen, zum Beispiel Mittelverschlüsse, beginnend mit einer Eckbaugruppe an einer Flügelecke, aus. Dabei werden alle Beschlagbauteile für jeden Flügelholm vollständig am Flügel vorfixiert. Durch die Anordnung der Kopplungsstellen beginnt die bevorzugte Reihenfolge der Beschlaggruppenmontage an den einzelnen Flügelholmen jeweils am Flügeleck mit der Eckbaugruppe, gefolgt von dem als nächstes erforderlichen Verbindungselement, bis die für die Schließfunktion erforderlichen Baugruppen am Flügelschenkel beziehungsweise Flügelholm angekoppelt und vorfixiert sind. Einzelteile oder nicht im Treibstangenverbund angeordnete Baugruppen können gegebenenfalls an den am besten in den Montageablauf passenden Stellen am Flügel befestigt werden.

Die Montage zeichnet sich durch die Trennung von Beschlagvorfixierung durch Klemmen beziehungsweise Einklipsen und einem nachfolgenden automatischen Verschrauben als ein sehr flexibles und kostengünstiges Montagesystem aus, wobei es unter anderem möglich ist, alle Schraubarbeiten in einem Arbeitsschritt, bevorzugt am Ende der Baugruppenvorfixierung zusammenzulegen. Die Schraubpositionen werden bevorzugt mittels programmierbarer Achsen variabel und schnell angesteuert. Damit wird vergleichsweise der Maschinenaufwand hinsichtlich der Anzahl der Schraubaggregate beziehungsweise Schraubereinrichtungen gering gehalten und die Montagezeit durch sofortiges Lösen der Greifer nach dem Vorfixieren der Baugruppen reduziert. Das Verfahren zeichnet sich auch durch eine hohe Flexibilität in der Gestaltung der Montagefolge aus, wobei es auch möglich ist, bei den einzelnen Montagestufen jeweils einzelne Schrauberarbeitsgänge zu integrieren. Hierzu ist beispielsweise vorgesehen, daß einer Greifereinrichtung 29 (Figur 5) eine in Pfeilrichtung P verlagerbare Schraubereinrichtung 98 zugeordnet ist. Somit können beispielsweise besonders lange Baugruppen mit einer einzigen Schraube zusätzlich zum Einklipsen vorbefestigt werden. Damit können die einzelnen Montagearbeitsschritte zeitlich sehr genau aufeinander abgestimmt werden, um die Taktzeit einzelner Montageschritte nicht länger als die Taktzeit einer der Montageeinrichtung 1 vorgeschalteten Montagestufe ansteigen zu lassen. Beispielsweise wird in dieser vorgeschalteten Montagestufe der Flügelrahmen mit seinen jeweiligen Holmen zusammengesetzt. Die Taktzeit liegt beispielsweise bei einer Minute. Durch die Trennung von Beschlagvorfixierung und Beschlagverschrauben lassen sich bei einzelnen Montagestufen auch Nebentätigkeiten integrieren wie beispielsweise das Bohren der Eckbandaufnahme. Durch das anordnungsbedingte Bearbeiten an zwei Flügelholmen gleichzeitig, läßt sich an jeder Bearbeitungsstation ein Teil der Montagearbeitsschritte in die Montagenebenzeit legen.

Zusätzlich kann bei einzelnen Montagestationen mit von einander unabhängigen Greiferachsen und Schrauberachsen der Schraubarbeitsgang in die Nebenzeit gelegt werden. So kann beispielsweise während des Bestückens des Greifers mit einer neuen Beschlagbaugruppe bereits die zuvor eingeklipste Baugrupppe durch einen Automatikschrauber am Fensterflügel festgeschraubt werden, wie dies in Figur 1 an der Montagestation 3 vorgesehen ist.

Die bevorzugte Montagefolge der Beschlagbaugruppen erfolgt aus den Ecken des Fensterflügels heraus in der Art und Weise, daß zunächst der Flügel an seiner Bandseite mit Beschlagteilen bestückt wird. Gleichzeitig wird in der Nebenzeit der waagerechte beziehungsweise Querholm mit Beschlagbaugruppen bestückt, beginnend von der äußeren Flügelecke zur Bandseite des Flügels hin orientiert. Dabei können beide Flügelholme einzeln hintereinander, bevorzugt jedoch paarweise, also gleichzeitig bestückt werden.

Bei jeder Montagestation sind also jeweils mindestens zwei Flügelholme gleichzeitig im Bearbeitungsmodus, wobei beispielsweise an beiden Flügelholmen vorfixiert oder aber an einem Flügelholm verschraubt und an einem anderen Flügelholm vorfixiert wird. Denkbar ist auch, daß an beiden Holmen die Beschlagteile gleichzeitig verschraubt werden. Das erfindungsgemäße Montageverfahren erlaubt also die Montage des gesamten Beschlagsatzes am Fensterflügel und Fenstertürflügel in einer Montagelinie.

Bei einem bevorzugten hier jedoch nicht dargestellten Ausführungsbeispiel kann vorgesehen sein, daß zwischen zwei Bearbeitungsstationen beziehungsweise Montagestationen ein verfahrbares, insbesondere höhenverfahrbares, Tischsegment angeordnet ist. Damit können zwischen zwei Montagestationen auch besonders kleine Fensterflügel weitertransportiert werden.

Selbstverständlich ist vorgesehen, daß -wenn ein Fensterflügel 8 (Figur 1) an der Montagestation 2 abgearbeitet wurde und an die Montagestation 3 weitertransportiert wurde- ein neuer beziehungsweise weiterer Fensterflügel der Montagestation 2 zugeführt wird. Damit ist der bevorzugte Montageablauf derart, daß immer vier Flügel gleichzeitig in der Montageeinrichtung 1, 1' und 1'' in Bearbeitung sind.

Zur optimalen Funktion eines fertigen Flügelrahmens ist es von Vorteil, wenn jede Eckbaugruppe entsprechend ihrer Funktion optimal ausgestaltet ist. Mit dem erfindungsgemäßen Verfahren beziehungsweise mit der erfindungsgemäßen Vorrichtung können verschiedene Eckbaugruppen montiert werden, die in den Magazinen bevorratet sind. Im Gegensatz zum Stand der Technik werden also nicht baugleiche Eckbaugruppen verwendet. Außerdem kann vorgesehen sein, daß eine Greifereinrichtung 29 noch einen Eindrücknocken für die Vorfixierung der Eckbaugruppen aufweist. Somit wird es auf einfache Art und Weise möglich, einen Schenkel einer Eckbaugruppe in die Umfangsnut einzubringen und mit dem Eindrücknocken den anderen Schenkel in den zugehörigen Abschnitt der Umfangsnut einzufahren beziehungsweise einzudrücken so daß die Eckbaugruppe vorfixiert ist.

## Patentansprüche

1. Verfahren zur maschinellen Montage von Beschlagteilen an Flügel- und/oder Blendrahmen von Fenstern, Türen oder dergleichen, mit folgenden Schritten:
dass in einem ersten Bearbeitungsschritt mindestens einem Holm des sich an einem ersten Montageort befindlichen Flügel- und/oder Blendrahmens mindestens ein maschinell gegriffenes Beschlagteil zugeführt und auf diese Weise in vorgebbarer Position am Rahmen durch reibschlüssiges Einklipsen oder reibschlüssiges Einpressen in eine Flügel-/Blenclrahmenfalz-Umfangsnut vorfixiert wird,
dass anschließend der Rahmen an einen weiteren Montageort verbracht wird und
dass nachfolgend in einem zweiten Bearbeitungsschritt das Beschlagteil an dem Holm maschinell festgeschraubt wird.

2. Verfahren nach Anspruch 1, **dadurch gekennzeichnet, daß** das maschinell gegriffene Beschlagteil entlang der Längsachse des Holms frei verfahrbar ist.

3. Verfahren nach einem der vorhergehenden Ansprüche, **dadurch gekennzeichnet, daß** eine das maschinelle Festschrauben vornehmende Schraubendrehereinrichtung parallel zur Längsachse des Holmes frei verfahrbar ist.

4. Verfahren nach einem der vorhergehenden Ansprüche, **dadurch gekennzeichnet, daß** die Montage von Beschlagteilen von einem Eckbereich des Rahmens beginnend in Richtung auf eine benachbarte Ecke des Rahmens erfolgt.

5. Verfahren nach einem der vorhergehenden Ansprüche, **dadurch gekennzeichnet, daß** die Montage der Beschlagteile derart erfolgt, daß beim Zuführen eines Beschlagteils angrenzend an ein bereits zugeführtes Beschlagteil gleichzeitig selbsttätig die Kopplung der beiden Beschlagteile erfolgt.

6. Verfahren nach einem der vorhergehenden Ansprüche**, dadurch gekennzeichnet, daß** ein als Eckbeschlag ausgebildetes Beschlagteil derart zugeführt wird, daß zunächst ein Schenkel des Eckbeschlags in einen Abschnitt der Flügel-/Blendrahmenfalz-Umfangsnut eintritt und der andere Schenkel durch Verfahren parallel zur Längsachse des Holmes in den zugehörigen Abschnitt der Flügel-/Blendrahmenfalz-Umfangsnut mit eintritt.

7. Verfahren nach einem der vorhergehenden Ansprüche, **dadurch gekennzeichnet, daß** ein als Eckbeschlag ausgebildetes Beschlagteil derart zugeführt wird, daß gleichzeitig beide Schenkel des Eckbeschlags in die zugehörigen Abschnitte der Flügel-/Blendrahmenfalz-Umfangsnut eintreten.

8. Verfahren nach einem der vorhergehenden Ansprüche, **dadurch gekennzeichnet, daß** zum Zuführen des Beschlagteils das maschinelle Greifen an einem Formmerkmal erfolgt.

9. Verfahren nach einem der vorhergehenden Ansprüche, **dadurch gekennzeichnet, daß** die zu montierenden Beschlagteile mindestens einem Magazin maschinell entnommen werden.

10. Verfahren nach einem der vorhergehenden Ansprüche, **dadurch gekennzeichnet, daß** die Entnahmeposition des Beschlagteils durch Verlagerbarkeit des Magazins stets gleich ist.

11. Vorrichtung, insbesondere zur Durchführung des Verfahrens nach einem oder mehreren der Ansprüche 1 bis 10, zur maschinellen Montage von Beschlagteilen an Flügel- und/oder Blendrahmen von Fenstern, Türen oder dergleichen, mit einer maschinellen Zuführeinrichtung (17,18,20,28) und einer maschinellen Befestigungseinrichtung (22,26,36,37), wobei die auf die Beschlagteile abgestimmte Zuführeinrichtung (17,18, 20,28) einer ersten Montagestation (2,3,4,5) und die auf dieselben, zuvor zugeführten Beschlagteile abgestimmte Befestigungseinrichtung (22,26,36,37) einer zweiten Montagestation (2,3,4,5) zugeordnet ist, und mit einer den Rahmen (8) von der ersten zur zweiten Montagestation (2,3,4,5) verbringenden maschinellen Verlagerungseinrichtung.

12. Vorrichtung nach Anspruch 11, **dadurch gekennzeichnet, daß** die Zuführeinrichtung (17,18,20,28) als Greifereinrichtung (29,30,31,32), Unterdruckeinrichtung und/oder Magneteinrichtung ausgebildet ist.

13. Vorrichtung nach einem der Ansprüche 11 und 12, **dadurch gekennzeichnet, daß** die Greifereinrichtung (29,30,31,32) entlang der Längsachse mindestens eines Holmes (51,52,53,54) des Flügel- und/oder Blendrahmens frei verfahrbar geführt ist.

14. Vorrichtung nach einem der Ansprüche 11 bis 13, **dadurch gekennzeichnet, daß** die Befestigungseinrichtung (22,26,36,37) entlang der Längsachse mindestens eines Holmes (51,52,53,54) des Flügel- und/oder Blendrahmens frei verfahrbar geführt ist.

15. Vorrichtung nach einem der Ansprüche 11 bis 14, **dadurch gekennzeichnet, daß** die Befestigungseinrichtung (22,26,36,37) eine Schraubereinrichtung (23,27,38,39) ist.

16. Vorrichtung nach einem der Ansprüche 11 bis 15, **dadurch gekennzeichnet, daß** die Verlagerungseinrichtung den Flügel- und/oder Blendrahmen quer, insbesondere 90° zur Längserstreckung dieses Holmes (51,53) bewegt.

## Claims

1. Method for automatically assembling fitting members to casements and/or frames of windows, doors or the like, the said method having the following steps:
in a first operating step at least one fitting member that has been automatically gripped is supplied at least to one bar of the casement and/or frame that is situated at a first assembly location and in this manner is preliminarily secured in a pre-determinable position on the frame by means of frictionally engaged clipping-in or frictionally engaged pressing-in into the circumferential groove of a casement / frame rebate,
the frame is then moved to an additional assembly location and
subsequently in a second operating step the fitting member is automatically screw-connected in a fixed manner to the bar.

2. Method according to claim 1, **characterised in that** the fitting member that has been automatically gripped is freely moveable along the longitudinal axis of the bar.

3. Method according to one of the preceding claims, **characterised in that** a screw-driver device that performs the automatic screw connecting in a fixed manner is freely displaceable parallel to the longitudinal axis of the bar.

4. Method according to one of the preceding claims, **characterised in that** the assembly of fitting members is effected beginning from a corner region of the frame in the direction of an adjacent corner of the frame.

5. Method according to one of the preceding claims, **characterised in that** the assembly of the fitting members is effected in such a manner that when a fitting member is supplied adjacent to a fitting member that has already been supplied, the coupling of the two fitting members is automatically effected at the same time.

6. Method according to one of the preceding claims, **characterised in that** a fitting member that is in the form of a corner fitting is supplied in such a manner that initially one portion of the corner fitting is introduced into a section of the circumferential groove of the casement/frame rebate and the other portion, by moving parallel to the longitudinal axis of the bar, is also introduced into the associated section of the circumferential groove of the casement/frame rebate.

7. Method according to one of the preceding claims, **characterised in that** a fitting member that is in the form of a corner fitting is supplied in such a manner that the two portions of the corner fitting are introduced into the associated sections of the circumferential groove of the casement/frame rebate at the same time.

8. Method according to one of the preceding claims, **characterised in that** for the supplying of the fitting member the automatic gripping is effected at a form feature.

9. Method according to one of the preceding claims, **characterised in that** the fitting members that are to be assembled are removed automatically from at least one magazine.

10. Method according to one of the preceding claims, **characterised in that** the removal position of the fitting member is always identical through the displaceability of the magazine.

11. Device, more especially for the accomplishment of the method according to one or more of claims 1 to 10, for the automatic assembling of fitting members to casements and/or frames of windows, doors or the like, the said device having an automatic supplying device (17, 18, 20, 28) and an automatic securing device (22, 26, 36, 37), wherein the supplying device (17, 17, 20, 28) that is co-ordinated with the fitting members is associated with a first assembly station (2, 3, 4, 5) and the securing device (22, 26, 36, 37) that is co-ordinated with the same previously supplied fitting members is associated with a second assembly station (2, 3, 4, 5), and the said device having an automatic displacement device that moves the frame (8) from the first assembly station to the second assembly station (2, 3, 4, 5).

12. Device according to claim 11, **characterised in that** the supplying device (17, 18, 20, 28) is in the form of a gripping device (29, 30, 31, 32), a negative pressure device and/or a magnetic device.

13. Device according to one of claims 11 and 12, **characterised in that** the gripping device (29, 30, 31, 32) is guided so as to be freely displaceable along the longitudinal axis at least of one bar (51, 52, 53, 54) of the casement and/or frame.

14. Device according to one of claims 11 to 13, **characterised in that** the securing device (22, 26, 36, 37) is guided so as to be freely displaceable along the longitudinal axis at least of one bar (51, 52, 53, 54) of the casement and/or frame.

15. Device according to one of claims 11 to 14, **characterised in that** the securing device (22, 26, 36, 37) is a screw driver device (23, 27, 38, 39).

16. Device according to one of claims 11 to 15, **characterised in that** the displacement device moves the casement and/or frame in a transverse manner, more especially 90° relative to the longitudinal extension of the said bar (51, 53).

## Revendications

1. Procédé pour le montage mécanique de ferrures sur des châssis de battant et/ou dormants de fenêtres, de portes ou similaires comportant les étapes suivantes :
- dans une première étape de traitement, au moins une ferrure saisie mécaniquement est amenée à un montant du châssis de battant et/ ou du dormant situé à un premier emplacement de montage et de cette manière, est préfixé en position prédéfinie sur le châssis par clipsage par friction ou par pressage par friction dans une rainure périphérique du châssis de battant/ de la feuillure du dormant,
- ensuite le châssis est amené à un autre emplacement de montage, et
- lors d'une deuxième étape de traitement, la ferrure est vissée mécaniquement au montant.

2. Procédé selon la revendication 1,
**caractérisé en ce que**
la ferrure saisie mécaniquement peut être déplacée librement le long de l'axe longitudinal du montant.

3. Procédé selon l'une quelconque des revendications précédentes,
**caractérisé en ce qu'**
un dispositif de vissage effectuant le vissage mécanique peut être déplacé librement parallèlement à l'axe longitudinal du montant.

4. Procédé selon l'une quelconque des revendications précédentes,
**caractérisé en ce que**
le montage de ferrures commençant par une zone d'angle du châssis a lieu en direction d'un angle voisin du châssis.

5. Procédé selon l'une quelconque des revendications précédentes,
**caractérisé en ce que**
le montage des ferrures a lieu de telle sorte que lors de l'amenée d'une ferrure à un endroit adjacent à une ferrure déjà amenée, l'accouplement des deux ferrures ait lieu automatiquement et simultanément.

6. Procédé selon l'une quelconque des revendications précédentes,
**caractérisé en ce qu'**
une ferrure réalisée en tant que ferrure angulaire est amenée de telle sorte que tout d'abord une branche de la ferrure angulaire pénètre dans une section de la rainure périphérique du châssis de battant/de la feuillure du dormant et que l'autre branche pénètre en même temps par déplacement parallèle à l'axe longitudinal du montant dans la section respective de la rainure périphérique du battant/de la feuillure du dormant qui lui est associée.

7. Procédé selon l'une quelconque des revendications précédentes,
**caractérisé en ce qu'**
une ferrure réalisée en tant que ferrure angulaire est amenée de telle sorte que les deux branches de la ferrure angulaire pénètrent simultanément dans les sections respectives de la rainure périphérique du châssis de battant/de la feuillure du dormant.

8. Procédé selon l'une quelconque des revendications précédentes,
**caractérisé en ce que**
pour l'amenée de la ferrure, la saisie mécanique se fait au niveau d'une caractéristique de forme.

9. Procédé selon l'une quelconque des revendications précédentes,
**caractérisé en ce que**
les ferrures à monter sont prélevées mécaniquement au moins d'une réserve.

10. Procédé selon l'une des revendications précédentes,
**caractérisé en ce que**
la position de prélèvement de la ferrure est toujours identique grâce à la possibilité de déplacement de la réserve.

11. Dispositif, en particulier pour la réalisation du procédé selon l'une quelconque des revendications 1 à 10, pour le montage mécanique de ferrures sur des châssis de battant et/ou dormants de fenêtres, portes ou similaires, avec un dispositif d'amenée mécanique (17, 18, 20, 28) et un dispositif de fixation mécanique (22, 26, 36, 37), dont le dispositif d'amenée (17, 18, 20, 28) adapté aux ferrures est associé à une première station de montage (2, 3, 4, 5) et le dispositif de fixation (22, 26, 36, 37) adapté aux mêmes ferrures amenées précédemment est associé à une deuxième station de montage (2, 3, 4 5), et avec un dispositif de déplacement mécanique qui transfère le châssis (8) de la première à la deuxième station de montage (2, 3, 4 ,5).

12. Dispositif selon la revendication 11,
**caractérisé en ce que**
le dispositif d'amenée (17, 18, 20, 28) est un dispositif à préhenseurs (29, 30, 31, 32), un dispositif à dépression et/ou un dispositif magnétique.

13. Dispositif selon l'une quelconque des revendications 11 et 12,
**caractérisé en ce que**
le dispositif à préhenseurs (29, 30, 31, 32) est guidé par déplacement libre le long de l'axe longitudinal d'au moins un montant (51, 52, 53, 54) du châssis du battant et/ou du dormant.

14. Dispositif selon l'une quelconque des revendications 11 et 13,
**caractérisé en ce que**
le dispositif de fixation (22, 26, 36, 37) est guidé par déplacement libre le long de l'axe longitudinal d'au moins un montant (51, 52, 53, 54) du châssis du battant et/ou du dormant.

15. Dispositif selon l'une quelconque des revendications 11 à 14,
**caractérisé en ce que**
le dispositif de fixation (22, 26, 36, 37) est un dispositif de vissage (23, 27,38,39).

16. Dispositif selon l'une quelconque des revendications 11 à 15,
**caractérisé en ce que**
le dispositif de déplacement déplace le châssis de battant et/ou le dormant perpendiculairement, en particulier de 90° par rapport à l'étirement longitudinal de ce montant (51, 53).
